# EUROPEAN PATENT SPECIFICATION

(11) **EP 2 649 872 B1**
(45) Date of publication and mention of the grant of the patent: **26.02.2020**
(21) Application number: 11847701.7
(22) Date of filing: 02.12.2011
(51) Int. Cl.: A01D 34/68, F16C 1/02, F16C 17/00, A01D 34/82, A01D 34/90

(54) **BRUSHCUTTER WORN ON THE SHOULDER**
AUF DER SCHULTER TRAGBARE MOTORSENSE
DÉBROUSAILLEUSE PORTÉE EN BANDOULIÈRE

(30) Priority: 06.12.2010 JP 2010271516
(43) Date of publication of application: 16.10.2013
(73) Proprietor: Taiseimonac Co., Ltd., Higashiosaka-shi, Osaka 578-0912 (JP)
(72) Inventor: ISHIKAWA, Yoshiaki, Higashiosaka-shi Osaka 578-0912 (JP)
(74) Representative: Glawe, Delfs, Moll
(86) International application number: PCT/JP2011/077896
(87) International publication number: WO 2012/077589

(56) References cited:
- EP-A2- 0 968 640
- WO-A1-93/17547
- WO-A1-03/051100
- JP-A- 2004 016 235
- JP-A- 2005 058 051
- JP-U- H0 474 917
- JP-U- H0 474 917
- JP-U- 56 039 925
- US-A- 4 286 675

## Description

### TECHNICAL FIELD

The present invention relates to a portable grass cutter that is used in a state of being hung on the shoulder.

### BACKGROUND ART

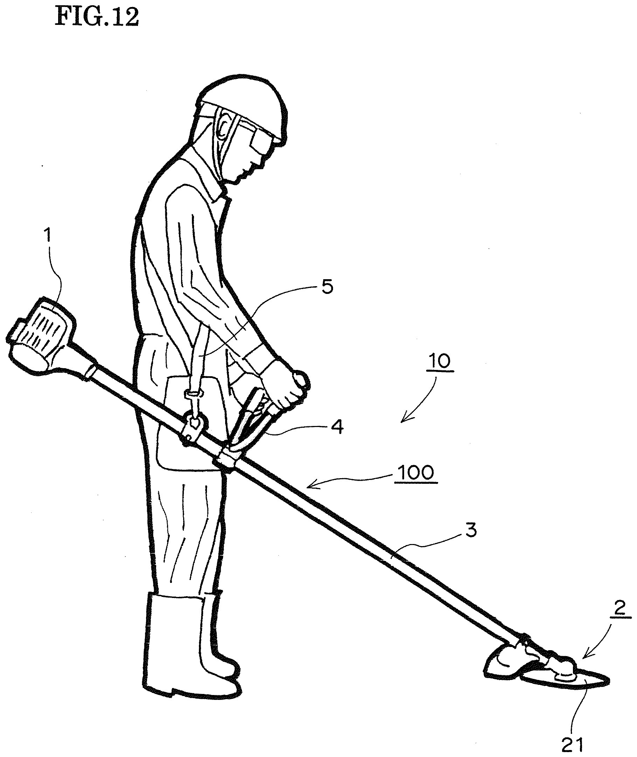

Conventionally, a commonly used shoulder-hanging type grass cutter 10 is supposed to be used in a state in which the grass cutter body 100 thereof is hung on the shoulder with a shoulder-hanging strap 5 as shown in FIG. 12. The grass cutter body 100 includes a rotation drive section 1, an operation section 2 having a cutter 21, a rod section 3 for connecting the rotation drive section 1 to operation section 2, and a handle 4. The rod section 3 has a straight shape from the rotation drive section 1 to the operation section 2. Furthermore, the operator grips the handle 4 and operates the grass cutter body 100 to control the height and angle of the operation section 2.
Patent Document 1: JP-A-2008-142072
Patent Document 2: JP-A-2006-340628
Further state of the art documents in this technical field are for example: WO 03/051100 A1, US 4 286 675 A, EP 0 968 640 A2, WO 93/17547 A1 and JP H04 74917 U.

### DISCLOSURE OF THE INVENTION

### PROBLEM TO BE SOLVED BY THE INVENTION

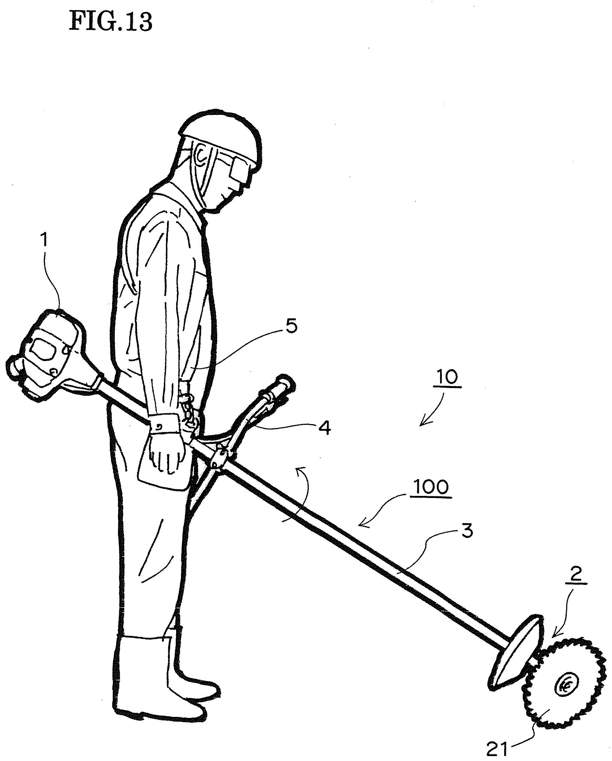

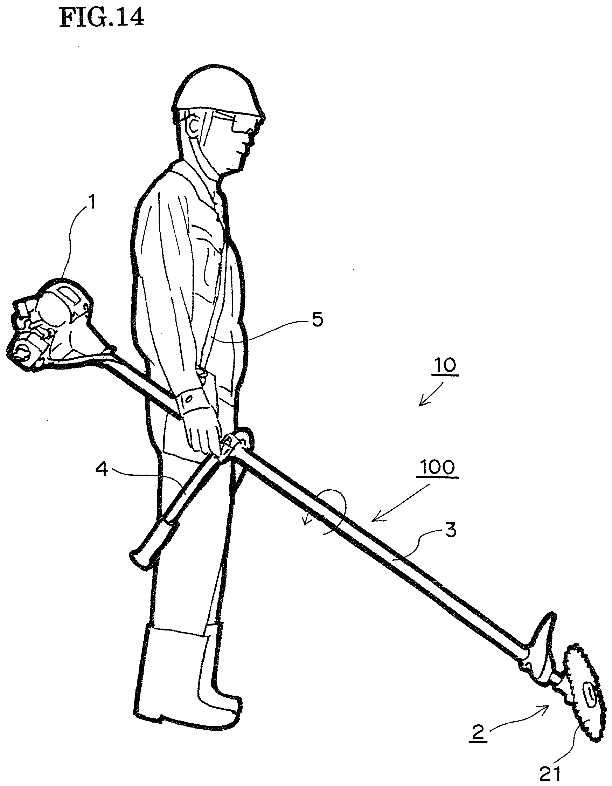

In the shoulder-hanging type grass cutter 10 having the above-mentioned configuration, when the operator releases his/her hands from the handle 4, the gravity center of the handle 4 itself is likely to be positioned downward from the axis of the rod section 3, whereby a rotation moment is exerted by the handle 4 to the rod section 3 around the axis thereof and there is a fear that the grass cutter body 100 may be rotated 90 degrees as shown in FIG. 13 or rotated 180 degrees as shown in FIG. 14 around the axis of the rod section 3. For this reason, if the operator releases his/her hands from the handle 4 in the case that the operator slips, falls, or loses physical balance on an inclined ground or the like during work, for example, the cutter 21 is oriented vertically, thereby shaving ground or bouncing back onto trees or the like. As a result, the operation section 2 becomes inoperable and there is a fear that the operator himself/herself and persons around the operator may be in danger. Hence, various countermeasures for solving this problem have been proposed conventionally.

The present invention is intended to provide a shoulder-hanging type grass cutter capable of preventing the danger described above from occurring.

### SOLUTION TO THE PROBLEM

The present invention is characterized in that there is provided a shoulder-hanging type grass cutter including a grass cutter body and a shoulder-hanging strap for supporting the grass cutter body so that the grass cutter body is hung on the shoulder, the grass cutter body equipped with a rotation drive section for generating a rotation force; an operation section for generating a rotation force; an operation section for performing cutting work by using a cutter that is rotated by receiving the rotation force; a rod section for connecting the rotation drive section to the operation section and for transmitting the rotation force generated by the rotation drive section to the operation section; and a handle secured to the rod section, wherein the shoulder-hanging strap is attached to the rod section on the side of the rotation drive section from the gravity center of the grass cutter body and on the side of the rotation drive section from the handle, the portion of the rod section on the side of the rotation drive section from the handle is curved in one direction, and the above-mentioned one direction is downward in the vertical plane including the rod section and the rotation shaft of the cutter in a state in which the grass cutter body is hung on the shoulder so as to be operable.

### EFFECTS OF THE INVENTION

According to the present invention, since the rod section is balanced like a "balancing toy" with the attachment position of the shoulder-hanging strap serving as a fulcrum, even if the operator releases his/her hands from the handle during work, the rotation moment exerted by the handle to the rod section around the axis thereof can be suppressed, and the rotation of the rod section around the axis thereof can be suppressed. As a result, it is possible to prevent the rod section from rotating arbitrarily and to prevent the occurrence of danger.

### BRIEF DESCRIPTION OF THE DRAWINGS

FIG. 1 is a side view showing a state in which a shoulder-hanging type grass cutter according to the present invention is used;
FIG. 2 is a perspective view showing a handle of a two-hand grip type;
FIG. 3 is a vertical cross-sectional view showing a rod section;
FIG. 4 is a cross-sectional view taken on line IV-IV of FIG. 3;
FIG. 5 is a side view showing the grass cutter and includes an enlarged cross-sectional view showing an operation section;
FIG. 6 is an exploded perspective view showing the internal components of another example of the rod section;
FIG. 7 is a vertical cross-sectional view showing the example shown in FIG. 6;
FIG. 8 is a perspective view showing another example of the handle;
FIG. 9 is a perspective view showing still another example of the handle;
FIG. 10 is a perspective view showing yet still another example of the handle;
FIG. 11 is a side view showing another curved state of the rod section;
FIG. 12 is a side view showing a state in which the conventional shoulder-hanging type grass cutter is used;
FIG. 13 is a side view showing a state in which the grass cutter shown in FIG. 12 is rotated 90 degrees around the axis of the rod section;
FIG. 14 is a side view showing a state in which the grass cutter shown in FIG. 12 is rotated 180 degrees around the axis of the rod section; and
FIG. 15 is a cross-sectional view showing the rod section of the grass cutter shown in FIG. 12.

### DESCRIPTION OF THE REFERENCE NUMERALS

- 1: rotation drive section
- 2: operation section
- 21: cutter
- 3: rod section
- 30A, 30B, 30C: portions
- 31: outer pipe
- 32: flexible shaft liner
- 33: flexible shaft
- 321: convex section
- 4: handle
- 5: shoulder-hanging strap
- 10: shoulder-hanging type grass cutter
- 100: grass cutter body

### BEST MODE FOR CARRYING OUT THE INVENTION

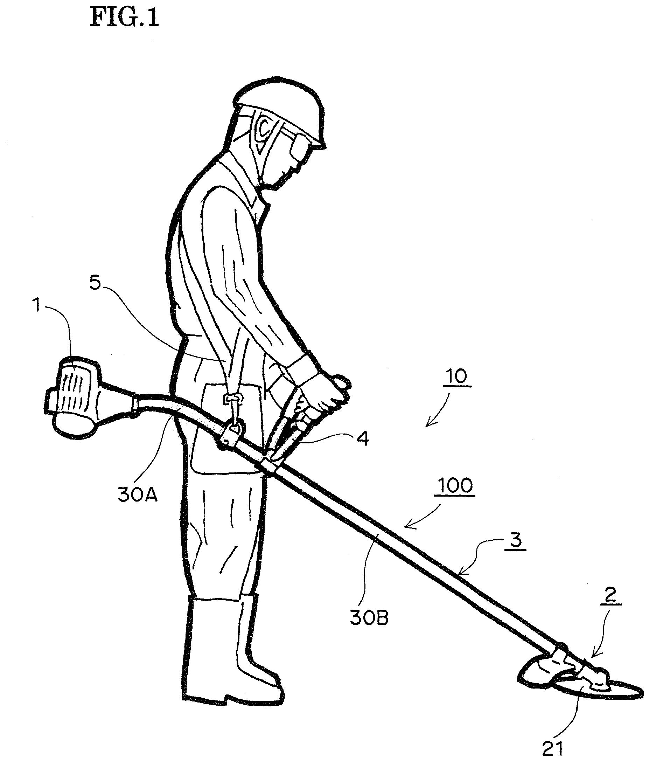

FIG. 1 is a side view showing a state in which a shoulder-hanging type grass cutter 10 according to the present invention is used. This grass cutter 10 includes a grass cutter body 100 and a shoulder-hanging strap 5. The shoulder-hanging strap 5 is provided to support the grass cutter body 100 so that the grass cutter body 100 is hung on the shoulder.

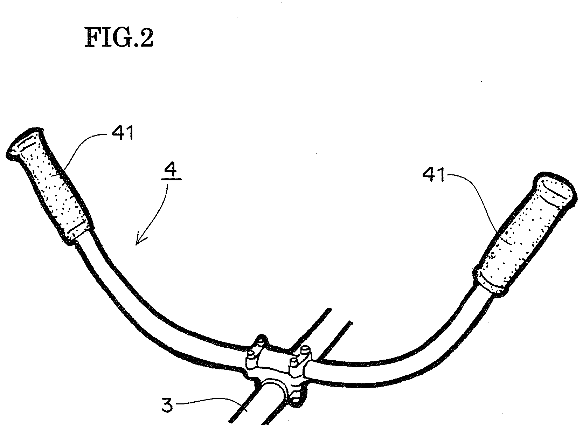

The grass cutter body 100 has a rotation drive section 1, an operation section 2, a rod section 3, and a handle 4. The rotation drive section 1 generates a rotation force. The operation section 2 receives the rotation force generated by the rotation drive section 1, thereby rotating a cutter 21 to perform cutting work. The rod section 3 connects the rotation drive section 1 to the operation section 2 and transmits the rotation force generated by the rotation drive section 1 to the operation section 2. The handle 4 is secured to the rod section 3. FIG. 2 is a perspective view showing the handle 4 of a two-hand grip type. The handle 4 has grip sections 41 at both end sections thereof. The operator grips the handle 4 and operates the grass cutter body 100 to adjust the height and angle of the operation section 2.

The shoulder-hanging strap 5 is attached to the rod section 3 on the side of the rotation drive section 1 from the gravity center of the grass cutter body 100 and on the side of the rotation drive section 1 from the handle 4.

The shoulder-hanging strap 5 is attached to the rod section 3 so as to be rotatable around the axis of the rod section 3. Hence, the operator can grip the handle 4 and perform operation so that the grass cutter body 100 is rotated around the axis of the rod section 3. In other words, the operator can change the inclination of the cutter 21 as desired depending on the inclination of the ground.

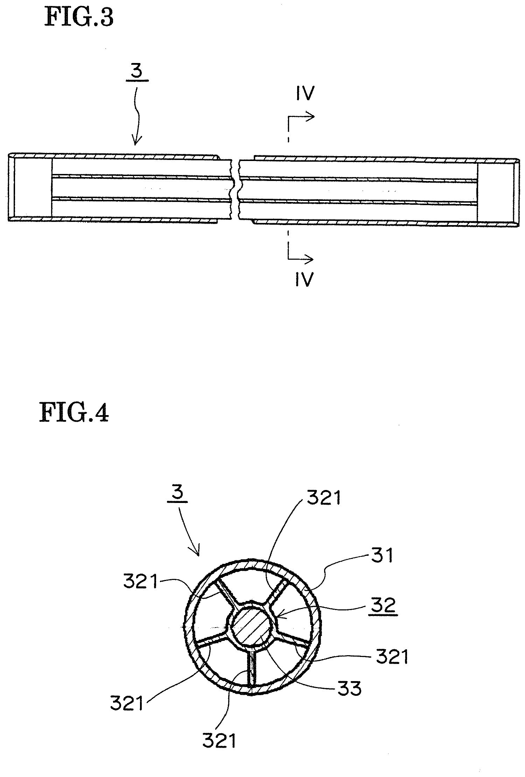

FIG. 3 is a vertical cross-sectional view showing the rod section 3. FIG. 4 is a cross-sectional view taken on line IV-IV of FIG. 3. The rod section 3 has a triple structure including an outer pipe 31, a flexible shaft liner 32, and a flexible shaft 33. The flexible shaft 33 is configured to rotate and transmit the rotation force. The flexible shaft 33 is inserted into the flexible shaft liner 32 so as to be rotatable. The flexible shaft liner 32 is made of resin and has five convex sections 321 on the outer surface thereof. However, the number of the convex sections 321 is not limited to five but should only be three or more. The convex sections 321 are positioned at equal intervals in the circumferential direction and have the same protrusion height. In addition, the tip ends of the convex sections 321 make contact with the inner wall of the outer pipe 31, whereby the flexible shaft liner 32 is fitted in the outer pipe 31. One end of the flexible shaft 33 is connected to the output shaft (not shown) of the rotation drive section 1, and the other end thereof is connected to the operation section 2.

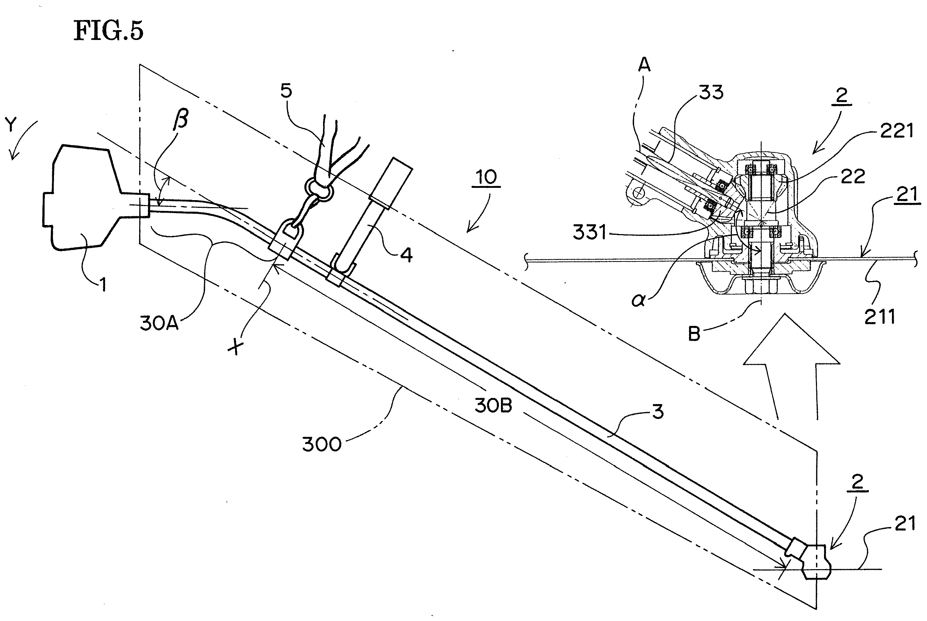

FIG. 5 is a side view showing the grass cutter 10 and includes an enlarged cross-sectional view showing the operation section 2. The rotation shaft 22 of the cutter 21 is in a vertical state in the case that the face 211 of the cutter 21 is in a horizontal state. A bevel gear 221 is secured to the upper end of the rotation shaft 22. On the other hand, a bevel gear 331 is secured to the other end of the flexible shaft 33. In addition, the bevel gear 331 is engaged with the bevel gear 221, whereby the rotation of the flexible shaft 33 is transmitted to the cutter 21. The angle α formed by the center axis A of the bevel gear 331 and the center axis B of the bevel gear 221 is 120 degrees.

Furthermore, in the present invention, the portion 30A of the rod section 3 on the side of the rotation drive section 1 from the attachment position X of the shoulder-hanging strap 5 is curved in one direction (in the direction indicated by arrow Y). The portion 30B of the rod section 3 on the side of the operation section 2 from the attachment position X of the shoulder-hanging strap 5 has a straight shape. The above-mentioned one direction is downward in the vertical plane 300 including the rod section 3 and the rotation shaft 22 of the cutter 21 in a state in which the grass cutter body 100 is hung on the shoulder so as to be operable. Furthermore, the curved angle β of the portion 30A with respect to the portion 30B is 30 degrees. Hence, the portion 30A and the portion 30B are balanced with each other like a "balancing toy" in the vertical plane 300 with the attachment position X of the shoulder-hanging strap 5 serving as a fulcrum in the state shown in FIG. 5. The angle α is related to the angle β; since the angle β is 30 degrees, the angle α is 120 degrees. Hence, general-purpose bevel gears can be used as the bevel gears 221 and 331. However, the angle β is not limited to 30 degrees but should only be in the range from 10 to 90 degrees. This is because, in the case that the angle β is in the range from 10 to 90 degrees, the portion 30A and the portion 30B can be balanced with each other like a "balancing toy" in the vertical plane 300 with the attachment position X serving as a fulcrum.

In the grass cutter 10 having the above-mentioned configuration, when the rotation drive section 1 is started in the state that the grass cutter body 100 is hung on the shoulder of the operator with the shoulder-hanging strap 5 as shown in FIG. 1, the rotation force thereof is transmitted to the cutter 21 via the flexible shaft 33, and the grass cutter 10 performs cutting work by using the cutter 21. At the time, the operator grips the handle 4 and rotates the rod section 3 around the axis thereof, whereby the operator can perform operation so that the face 211 of the cutter 21 is aligned with the inclination of the ground.

Furthermore, in the grass cutter 10 having the above-mentioned configuration, since the portion 30A and the portion 30B of the rod section 3 are balanced with each other like a "balancing toy" in the vertical plane 300 with the attachment position X serving as a fulcrum, even if the operator releases his/her hands from the handle 4 during work, the rotation moment exerted by the handle 4 to the rod section 3 around the axis thereof is suppressed, whereby the rotation around the axis of the rod section 3 is suppressed. As a result, in the grass cutter 10 having the above-mentioned configuration, even if the operator releases his/her hands from the handle 4 during work, the grass cutter body 100 can be prevented from being rotated 90 degrees as shown in FIG. 13 or 180 degrees as shown in FIG. 14 around the axis of the rod section 3. Hence, it is possible to prevent the occurrence of danger to the operator himself/herself and persons around the operator.

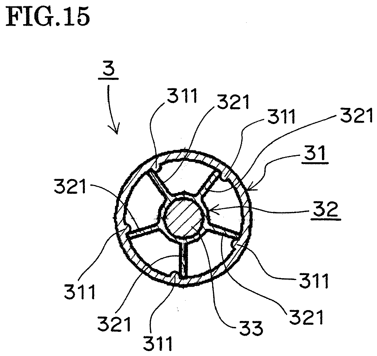

Moreover, in the grass cutter 10 having the above-mentioned configuration, the flexible shaft liner 32 can be prevented from being rotated together with the flexible shaft 33 without providing any particular configuration. In other words, in the grass cutter 10 including the rod section 3 having the straight shape shown in FIG. 12 throughout the entire length, convex sections 311 with which the tip end sections of convex sections 321 of the flexible shaft liner 32 make contact in the circumferential direction are formed on the inner wall of the outer pipe 31 as shown in FIG. 15 to prevent the flexible shaft liner 32 from being rotated together with the flexible shaft 33. However, in the grass cutter 10 having the above-mentioned configuration according to the present invention, since the rod section 3 is curved, the rotation of the flexible shaft liner 32 is suppressed. As a result, in the grass cutter 10 having the above-mentioned configuration, the flexible shaft liner 32 can be prevented from being rotated together with the flexible shaft 33 without providing any particular configuration.

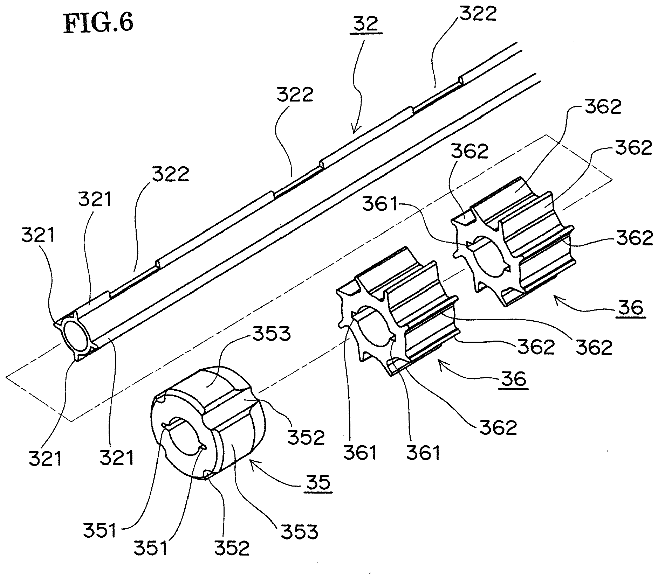

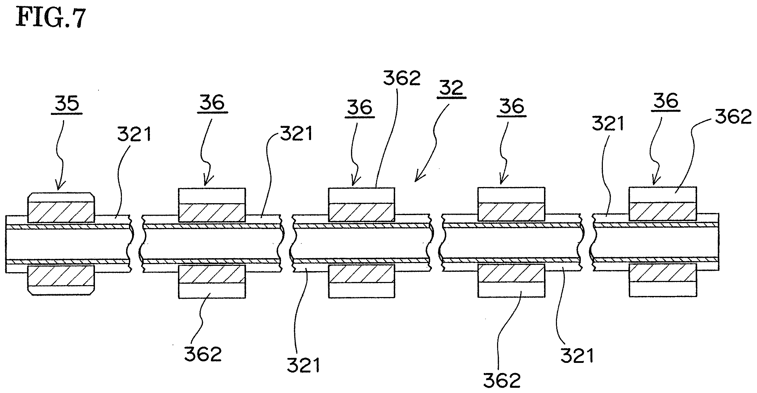

The rod section 3 may have an inner structure shown in FIGS. 6 and 7. In this example, the flexible shaft liner 32 is fitted in the outer pipe 31 via rubber bushings 35 and 36 that are fitted on the flexible shaft liner 32. The rubber bushings 35 and 36 have a function to dampen the vibration caused by the rotation of the flexible shaft 33. The convex sections 321, four in number, are provided and positioned at equal intervals in the circumferential direction and protrude by the same height. The height has a dimension so that the convex sections 321 do not make contact with the inner wall of the outer pipe 31. In the convex sections 321 used as a pair and disposed in opposite directions, cutouts 322 are formed at predetermined intervals in the longitudinal direction. The rubber bushings 35 and 36 are fitted on at the positions of the cutouts 322. At the time, the convex sections 321 which are used as a pair and in which the cutouts 322 are not formed are fitted in grooves 351 and 361 formed in the inner faces of the rubber bushings 35 and 36. The rubber bushing 35 has peripheral face sections 353 separated by grooves 352 on the outer face thereof, and the peripheral face sections 353 make contact with the inner wall of the outer pipe 31, whereby the rubber bushing 35 is fitted in the outer pipe 31. The rubber bushing 36 has a plurality (eight in this figure) of protruding convex sections 362 inclined in one direction of the circumferential direction, and the tip ends of the convex sections 362 make contact with the inner wall of the outer pipe 31, whereby the rubber bushing 36 is fitted in the outer pipe 31. Also in the case of the rod section 3, since the rod section 3 is curved, the rotation of the flexible shaft liner 32 is suppressed. As a result, also in the grass cutter 10 in which the rod section 3 is used, the flexible shaft liner 32 can be prevented from being rotated together with the flexible shaft 33 without providing any particular configuration.

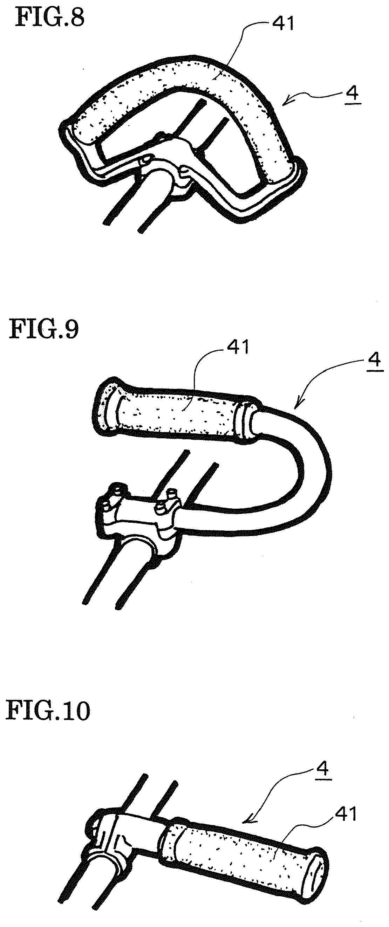

What's more, for the grass cutter 10 having the above-mentioned configuration, a looped handle 4 shown in FIG. 8, a U-shaped handle 4 shown in FIG. 9, or a cantilever handle 4 shown in FIG. 10 may also be adopted, for example.

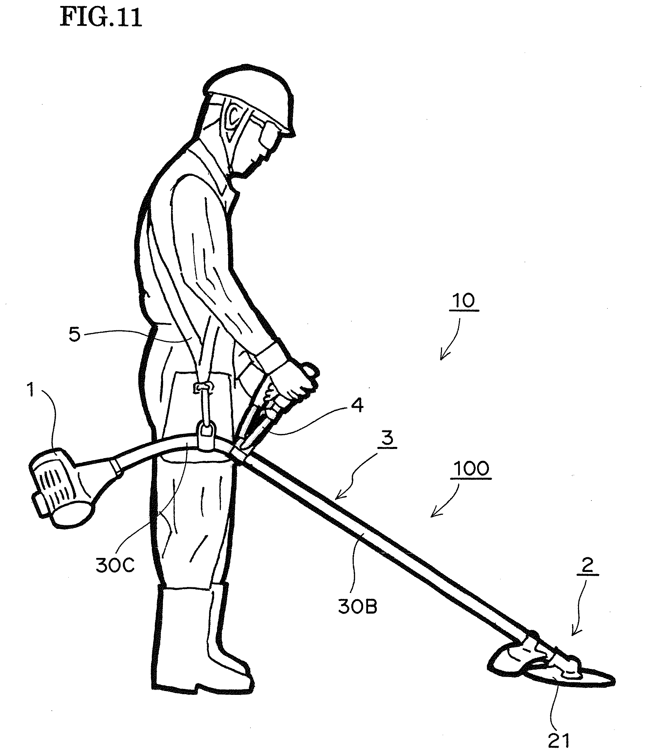

Still further, in the grass cutter 10 having the above-mentioned configuration, although the portion 30A of the rod section 3 on the side of the rotation drive section 1 from the attachment position X of the shoulder-hanging strap 5 is curved, the portion 30C of the rod section 3 on the side of the rotation drive section 1 from the handle 4 may also be curved as shown in FIG. 11.

## Claims

1. A shoulder-hanging type grass cutter (10) including a grass cutter body (100) and a shoulder-hanging strap (5) for supporting the grass cutter body (100) so that the grass cutter body (100) is hung on the shoulder, wherein
the grass cutter body (100) comprises a rotation drive section (1) for generating a rotation force; an operation section (2) for performing cutting work by using a cutter (21) that is rotated by receiving the rotation force; a rod section (3) for connecting the rotation drive section (1) to the operation section (2) and for transmitting the rotation force generated by the rotation drive section (1) to the operation section (2); and a handle (4) secured to the rod section (3),
the shoulder-hanging strap (5) is attached to the rod section (3) on the side of the rotation drive section (1) from the gravity center of the grass cutter body (100) and on the side of the rotation drive section (1) from the handle (4), **characterized in that** the portion of the rod section (3) on the side of the rotation drive section (1) from the handle (4) is curved in one direction, the one direction is downward in the vertical plane including the rod section (3) and the rotation shaft of the cutter (21), an inclined section where the rod section (3) inclining downwardly toward the operation section (2) from a curved portion, the inclined section is in a linear shape, in a state in which the grass cutter body (100) is hung on the shoulder so as to be operable.

2. The shoulder-hanging type grass cutter (10) according to claim 1, wherein
the portion of the rod section (3) on the side of the rotation drive section (1) from the attachment position of the shoulder-hanging strap (5) is curved in the one direction.

3. The shoulder-hanging type grass cutter (10) according to claim 1 or 2, wherein
the curved angle of the portion of the rod section (3) is in the range from 10 to 90 degrees.

4. The shoulder-hanging type grass cutter (10) according to claim 3, wherein
the curved angle of the portion of the rod section (3) is 30 degrees.

5. The shoulder-hanging type grass cutter (10) according to any one of claims 1 to 4, wherein
the rod section (3) has a triple structure including an outer pipe (31), a flexible shaft liner (32) fitted in the outer pipe (31), and a flexible shaft (33) inserted into the flexible shaft liner (32), the flexible shaft (33) being configured to rotate and transmit the rotation force,
the flexible shaft liner (32) is made of resin and has three or more convex sections (321) provided on the outer surface thereof, positioned at equal intervals in the circumferential direction, and protruding by the same height, and
the tip ends of the convex sections (321) of the flexible shaft liner (32) make contact with the inner wall of the outer pipe (31), whereby the flexible shaft liner (32) is fitted in the outer pipe (31).

6. The shoulder-hanging type grass cutter (10) according to any one of claims 1 to 4, wherein
the rod section (3) has a triple structure including an outer pipe (31), a flexible shaft liner (32) fitted in the outer pipe (31), and a flexible shaft (33) inserted into the flexible shaft liner (32), the flexible shaft (33) being configured to rotate and transmit the rotation force, and
the flexible shaft liner (32) is fitted in the outer pipe (31) via rubber bushings fitted on the flexible shaft liner (32).

## Patentansprüche

1. Rasenschneider (10) vom Schulter-Hänge-Typ mit einem Rasenschneider-Körper (100) und einem Schulter-Hänge-Gurt (5) zum Tragen des Rasenschneider-Körpers (100) derart, dass der Rasenschneider-Körper (100) an der Schulter hängt, wobei
der Rasenschneider-Körper (100) einen Drehantriebs-Abschnitt (1) zur Erzeugung einer Drehkraft, einen Betriebsabschnitt (2) zur Durchführung der Schneidarbeit durch Verwendung einer Schneidvorrichtung (21), die durch Empfang der Drehkraft gedreht wird, einen Stangenabschnitt (3) zur Verbindung des Drehantriebs-Abschnitts mit dem Betriebsabschnitt (2) und zur Übertragung der Drehkraft, die durch den Drehantriebs-Abschnitt (1) erzeugt wird, an den Betriebsabschnitt (2) und einen Handgriff (4) aufweist, der mit dem Stangenabschnitt (3) verbunden ist,
wobei der Schulter-Hänge-Gurt (5) mit dem Stangenabschnitt (3) auf der Seite des Drehantriebs-Abschnitts (1) von dem Schwerpunkt des Rasenschneider-Körpers (100) und an der Seite des Drehantriebs-Abschnitts (1) von dem Handgriff (4) verbunden ist,
**dadurch gekennzeichnet, dass** der Teil des Stangenabschnitts (3) an der Seite des Drehantriebs-Abschnitts (1) von dem Handgriff (4) in eine Richtung gekrümmt ist, wobei die eine Richtung nach unten in der vertikalen Ebene einschließlich des Stangenabschnitts (3) und der Drehwelle der Schneidvorrichtung (21) ist, mit einem geneigten Abschnitt, in dem der Stangenabschnitt (3) zu dem Betriebsabschnitt (2) von einem gekrümmten Bereich geneigt ist, wobei der geneigte Abschnitt in einer linearen Form in einem Zustand ist, bei dem der Rasenschneider-Körper (100) von der Schulter hängt, um betriebsfähig zu sein.

2. Rasenschneider (10) vom Schulter-Hänge-Typ nach Anspruch 1, wobei
der Teil des Stangenabschnitts (3) an der Seite des Drehantriebs-Abschnitts (1) von der Befestigungsposition des Schulter-Hänge-Gurts (5) in der einen Richtung gekrümmt ist.

3. Rasenschneider (10) vom Schulter-Hänge-Typ nach Anspruch 1 oder 2, wobei der Krümmungswinkel des Teils des Stangenabschnitts (3) im Bereich von 10 bis 90° liegt.

4. Rasenschneider (10) vom Schulter-Hänge-Typ nach Anspruch 3, wobei der Krümmungswinkel des Teils des Stangenabschnitts (3) 30° beträgt.

5. Rasenschneider (10) vom Schulter-Hänge-Typ nach einem der Ansprüche 1 bis 4, wobei
der Stangenabschnitt (3) eine dreifache Struktur einschließlich eines äußeren Rohres (31), einer Flexwellen-Buchse (32), die in das äußere Rohr (31) eingepasst ist, und einer flexiblen Welle (33) aufweist, die in die Flexwellen-Buchse (32) eingefügt ist, wobei die flexible Welle (33) ausgebildet ist, um sich zu drehen und die Drehkraft zu übertragen,
wobei die Flexwellen-Buchse (32) aus Harz gefertigt ist und drei oder mehr konvexe Abschnitte (321) aufweist, die an ihrer Außenfläche vorgesehen sind, die in gleichen Intervallen in der Umfangsrichtung positioniert sind und in derselben Höhe vorstehen, und
wobei die Spitzenenden der konvexen Abschnitte (321) der Flexwellen-Buchse (32) in Kontakt mit der Innenwand des äußeren Rohres (31) stehen, wodurch die Flexwellen-Buchse (31) in das äußere Rohr (31) eingepasst ist.

6. Rasenschneider (10) vom Schulter-Hänge-Typ nach einem der Ansprüche 1 bis 4, wobei
der Stangenabschnitt (3) eine dreifache Struktur mit einem äußeren Rohr (31), einer Flexwellen-Buchse (32), die in das äußere Rohr (31) eingepasst ist, und einer flexiblen Welle (33) aufweist, die in die Flexwellen-Buchse (32) eingepasst ist, wobei die flexible Welle (33) ausgebildet ist, um sich zu drehen und die Drehkraft zu übertragen, und
wobei die Flexwellen-Buchse (32) in das äußere Rohr (31) über Gummihülsen eingepasst ist, die auf die Flexwellen-Buchse (32) angepasst sind.

## Revendications

1. Débroussailleuse de type à bandoulière (10) comprenant un corps de débroussailleuse (100) et une sangle de bandoulière (5) pour supporter le corps de débroussailleuse (100) de sorte que le corps de débroussailleuse (100) est suspendu sur l'épaule, dans laquelle :
le corps de débroussailleuse (100) comprend une section d'entraînement en rotation (1) pour générer une force de rotation ; une section d'opération (2) pour réaliser le travail de coupe en utilisant un dispositif de coupe (21) qui est entraîné en rotation en recevant la force de rotation ; une section de tige (3) pour raccorder la section d'entraînement en rotation (1) à la section d'opération (2) et pour transmettre la force de rotation générée par la section d'entraînement en rotation (1) à la section d'opération (2) ; et une poignée (4) fixée à la section de tige (3),
une sangle de bandoulière (5) est fixée sur la section de tige (3) du côté de la section d'entraînement en rotation (2) à partir du centre de gravité du corps de débroussailleuse (100) et du côté de la section d'entraînement en rotation (1) à partir de la poignée (4),
**caractérisée en ce que** la partie de la section de tige (3) du côté de la section d'entraînement en rotation (1) à partir de la poignée (4) est incurvée dans une direction, la une direction est descendante dans le plan vertical comprenant la section de tige (3) et l'arbre de rotation du dispositif de coupe (21), une section inclinée où la section de tige (3) s'incline vers le bas vers la section d'opération (2) à partir d'une partie incurvée, la section inclinée a une forme linéaire, dans un état dans lequel le corps de débroussailleuse (100) est suspendu sur l'épaule afin de pouvoir être actionné.

2. Débroussailleuse de type à bandoulière (10) selon la revendication 1, dans laquelle :
la partie de la section de tige (3) du côté de la section d'entraînement en rotation (1) à partir de la position de fixation de la sangle de bandoulière (5) est incurvée dans la une direction.

3. Débroussailleuse de type à bandoulière (10) selon la revendication 1 ou 2, dans laquelle :
l'angle incurvé de la partie de la section de tige (3) est dans la plage de 10 à 90 degrés.

4. Débroussailleuse de type à bandoulière (10) selon la revendication 3, dans laquelle :
l'angle incurvé de la partie de la section de tige (3) est de 30 degrés.

5. Débroussailleuse de type à bandoulière (10) selon l'une quelconque des revendications 1 à 4, dans laquelle :
la section de tige (3) a une triple structure comprenant un tuyau externe (31), un revêtement d'arbre flexible (32) monté dans le tuyau externe (31) et un arbre flexible (33) inséré dans le revêtement d'arbre flexible (32), l'arbre flexible (33) étant configuré pour tourner et transmettre la force de rotation,
le revêtement d'arbre flexible (32) est réalisé à partir de résine et a trois sections convexes (321) ou plus prévues sur sa surface externe, positionnées à intervalles identiques dans la direction circonférentielle, et faisant saillie selon la même hauteur, et
les extrémités de pointe des sections convexes (321) du revêtement d'arbre flexible (32) établissent le contact avec la paroi interne du tuyau externe (31), moyennant quoi le revêtement d'arbre flexible (32) est monté dans le tuyau externe (31).

6. Débroussailleuse de type à bandoulière (10) selon l'une quelconque des revendications 1 à 4, dans laquelle :
la section de tige (3) a une triple structure comprenant un tuyau externe (31), un revêtement d'arbre flexible (32) monté dans le tuyau externe (31) et un arbre flexible (33) inséré dans le revêtement d'arbre flexible (32), l'arbre flexible (33) étant configuré pour tourner et transmettre la force de rotation, et
le revêtement d'arbre flexible (32) est monté dans le tuyau externe (31) via des manchons en caoutchouc montés sur le revêtement d'arbre flexible (32).
